# EUROPÄISCHE PATENTSCHRIFT

(11) **EP 0 888 498 B1**
(45) Veröffentlichungstag und Bekanntmachung des Hinweises auf die Patenterteilung: **17.11.1999**
(21) Anmeldenummer: 97914250.2
(22) Anmeldetag: 17.03.1997
(51) Int. Cl.: F02D 41/34

(54) **VERFAHREN UND VORRICHTUNG ZUR STEUERUNG EINES EINSPRITZVENTILS BEI EINER SCHNELLAUFENDEN ZWEI-TAKT-BRENNKRAFTMASCHINE**
PROCESS FOR CONTROLLING AN INJECTION VALVE IN A FAST-RUNNING FUEL-INJECTION TWO-STROKE INTERNAL COMBUSTION ENGINE AND DEVICE FOR IMPLEMENTING IT
PROCEDE ET DISPOSITIF DE COMMANDE D'UNE SOUPAPE D'INJECTION DANS UN MOTEUR A COMBUSTION INTERNE DEUX TEMPS RAPIDE

(30) Priorität: 22.03.1996 DE 19611289
(43) Veröffentlichungstag der Anmeldung: 07.01.1999
(73) Patentinhaber: Dolmar GmbH, 22045 Hamburg (DE)
(72) Erfinder: KLARE, Hartmut, D-98554 Benshausen (DE); LÖFFLER, Klaus, D-09380 Thalheim (DE); SCHULZ, Peter, D-09123 Chemnitz (DE); MEHLHOSE, Uwe, D-09123 Chemnitz (DE); LUKOMSKI, Jan, D-18059 Rostock (DE); MATTHEES, Klaus, D-09599 Freiberg (DE); SCHÖNHAAR, Jochen, D-22529 Hamburg (DE); SINGER, Andreas, D-08427 Fraureuth (DE)
(74) Vertreter: Gerbaulet, Hannes
(86) Internationale Anmeldenummer: EP9701316
(87) Internationale Veröffentlichungsnummer: WO9736098

(56) Entgegenhaltungen:
- EP-A- 0 261 473
- EP-A- 0 683 310
- DE-A- 4 012 491
- GB-A- 2 255 374
- US-A- 5 081 975

## Beschreibung

### Anwendungsgebiet

Die vorliegende Erfindung betrifft ein Verfahren zur Steuerung eines Einspritzventils bei einer schnellaufenden 2-Takt-Brennkraftmaschine mit Kraftstoffeinspritzung gemäss dem Oberbegriff des Anspruchs 1.

Die Erfindung betrifft weiterhin eine Vorrichtung zur Durchführung eines solchen Verfahrens.

### Stand der Technik

Während Viertaktmotoren im Allgemeinen über den gesamten Drehzahl- und Lastbereich einen relativ gleichförmigen Motorlauf aufweisen, zeigen Zweitaktmotoren erhebliche Unterschiede zwischen den Drehzahlbereichen "Leerlauf" und "Arbeitsbereich". Im Leerlauf (geringe Drehzahlen von einigen 100 U/min) ist ein erheblicher Unrundlauf vorhanden, der immer eine exakte Einspritzung erfordert. Wenn, ausgehend von einem bestimmten Triggersignal, eine Berechnung des Einspritzbeginns durchgeführt wird, muss diese in unmittelbarer Nähe des Triggersignals erfolgen, da sonst erhebliche Fehler bezüglich des gewünschten Einspritzbeginns auftreten können. Diese hängen - wie bereits erwähnt - wesentlich vom Gleichförmigkeitsgrad des Motorlaufs ab und können von Umdrehung zu Umdrehung erheblich differieren, so dass der Motorlauf unkontrollierbar wird. Auch die Einspritzung muss daher unmittelbar in der Nähe des Triggerpunktes bzw. Triggersignals erfolgen.

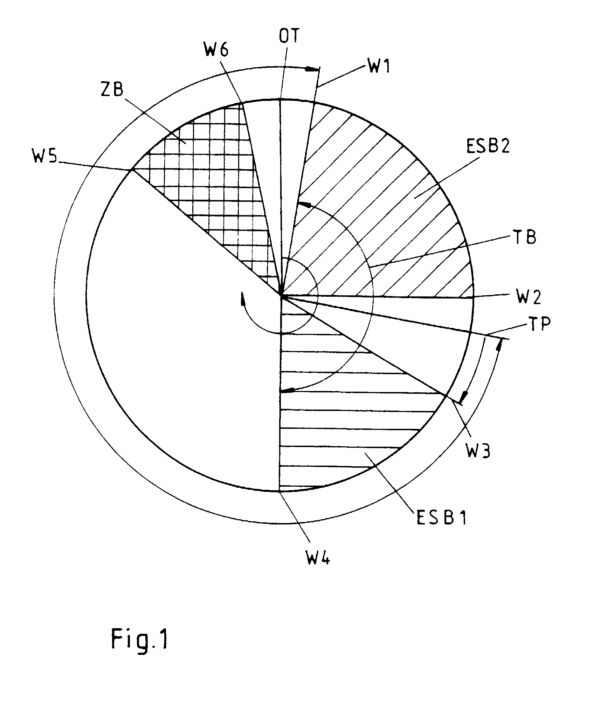

Wie in der Fig. 1 in einem Winkeldiagramm für die Motorkurbelwelle (KW) im Bezug auf den oberen Totpunkt OT dargestellt ist, liegen für geringe Drehzahlen die Einspritzbeginne (ESB) in Abhängigkeit von der jeweiligen Motorkonfiguration in einem ersten (schraffierten) Bereich ESB1 zwischen 180 und 240 °KW (Winkel W4 und W3) vor dem oberen Totpunkt OT des Motors. Bei höheren Drehzahlen (mehrere 1000 U/min) sind andere Einspritzbeginne, entsprechend den jeweiligen Lastzuständen, erforderlich. Gewöhnlich ist eine Verschiebung des Einspritzbeginns in Richtung "früh" in einen zweiten (schraffierten) Bereich ESB2 erforderlich, der zwischen 270 und 350 °KW (Winkel W2 und W1) vor dem oberen Totpunkt OT liegt.

Für niedrige Drehzahlen (z.B. im Leerlauf) ist es nach den o.g. Ausführungen zweckmässig und vorteilhaft, den Triggerpunkt, an dem das Triggersignal erzeugt wird, nahe am Beginn des ersten Bereiches ESB1 zu plazieren, also z.B. an der durch TP bezeichneten Stelle in Fig. 1. Auf diese Weise besteht nur ein kurzer Winkelabstand zwischen TP und dem Beginn des Einspritzbereiches (W3). Wird nun der Einspritzbeginn bei steigenden Drehzahlen von dem Bereich ESB1 in den Bereich ESB2 vorverlegt, müsste eigentlich auch der Triggerpunkt TP entsprechend verlegt werden. Eine (Quasi-)Verschiebung des Triggerpunktes erfolgt zweckmässigerweise dadurch, dass die Berechnung des Einspritzbeginns für die nächste Umdrehung durchgeführt wird (langer Pfeil von TP über die Winkel W5 und W6 des Zündbereichs ZB nach W1 in Fig. 1). Aufgrund der benötigten Rechenzeit sowie der zur Steuerung der Oeffnungszeit für das Einspritzventil benötigten Zeit kann es in Abhängigkeit des geforderten Einspritzbeginns dazu kommen, dass das für den Leerlaufbereich zur Anwendung kommende Triggersignal (z.B. eines Hall-Gebers) nicht ausgewertet werden kann. Dadurch wäre die Einspritzung für die nächste Umdrehung nicht oder nur stark fehlerbehaftet möglich.

In der GB-A 2 255 374 wird für eine allgemeine selbstzündende oder fremdgezündete Brennkraftmaschine eine Berechnung der Einspritzzeit vorgeschlagen, bei welcher pro Umdrehung der Maschine eine Mehrzahl von gleichmässig beabstandeten Zeit-bzw. Drehwinkelsignalen erzeugt werden. Für jedes Intervall zwischen zwei benachbarten Zeitsignalen werden fortlaufend die Einspritzparameter berechnet und gleichzeitig die verstrichene Zeit mit der Zeit bis zum Einspritzbeginn verglichen. Die im letztmöglichen Intervall vor Einspritzbeginn berechneten Parameter werden schliesslich zur Steuerung des Einspritzvorganges herangezogen. Eine Triggerung der Einspritzberechnung an fest vorgegebenen Triggerpunkten ist dabei nicht vorgesehen.

Die EP-A2 0 683 310 schlägt speziell für gasbetriebene Zweitakt-Brennkraftmaschinen eine Steuerung des Brennstoffeinlasses vor, bei der zur Berechnung des Einlassbeginns und der Einlasszeit an der Kurbelwelle ein Drehwinkelgeber angeordnet ist, der pro Umdrehung ein Rückstellsignal und eine Mehrzahl von gleichmässig beabstandeten Zeit- bzw. Drehwinkelsignalen erzeugt. Die Einlassparameter werden in Abhängigkeit von der Drehzahl verändert, wobei sich bei höheren Drehzahlen der Einlasswinkel auf "früh" vorverschiebt. Die Berechnung der Einlassparameter beginnt jedoch in allen Fällen unverändert mit dem Rückstellsignal. Dies ist in diesem Fall unkritisch weil die Vorverschiebung des Einlasswinkels bei höheren Drehzahlen wegen des gasförmigen Brennstoffes vergleichsweise gering ist. Eine Anwendung auf mit Flüssigbrennstoff betriebene Maschinen erscheint fraglich, weil dort wesentlich mehr zeit für die Verdampfung des eingespritzten Brennstoffes vorgesehen werden muss.

### Aufgabe, Lösung, Vorteile

Es ist nun Aufgabe der Erfindung, ein Verfahren zur Steuerung eines schnellaufenden Zweitaktmotors anzugeben, welches diese Nachteile überwindet und für jede Umdrehung des Motors in Abhängigkeit von Last und Drehzahl einen optimalen Einspritzbeginn in Verbindung mit der erforderlichen Einspritzdauer gewährleistet.

Die Aufgabe wird bei einem Verfahren der eingangs genannten Art durch die Merkmale aus dem Kennzeichen des Anspruchs 1 gelöst.

Eine erste bevorzugte Ausführungsform des erfindungsgemässen Verfahrens zeichnet sich dadurch aus, dass die beiden Triggerpunkte jeweils in einem Triggerbereich liegen, welcher im Bezug auf den Kurbelwellen-Drehwinkel nahe vor dem zugehörigen Einspritzbereich liegt. Hierdurch werden die Auswirkungen von Drehzahlschwankungen auf die Einspritzsteuerung auf ein Minimum begrenzt.

Als besonders günstig hat sich erwiesen, wenn gemäß einer Weiterbildung dieser Ausführungsform der erste Bereich innerhalb von etwa 180 - 240° KW vor dem oberen Totpunkt der Maschine liegt, der zweite Bereich innerhalb von etwa 270 - 350° KW vor dem oberen Totpunkt liegt, der erste Triggerbereich innerhalb von etwa 180 - 270 °KW vor dem oberen Totpunkt liegt, und der zweite Triggerbereich innerhalb von etwa 10 - 150° KW vor dem oberen Totpunkt liegt.

Eine weitere bevorzugte Ausführungsform des Verfahrens nach der Erfindung ist dadurch gekennzeichnet, daß die Zündung der Maschine mittels eines Zündmagneten mehr als 10° KW, insbesondere etwa 20° KW, vor dem oberen Totpunkt erfolgt, und daß das vom Zündmagneten abgegebene Zündsignal als Triggersignal für den zweiten Einspritzbereich verwendet wird. Damit wird eine Überschneidung von Rechenzeit, Einspritzdauer und Triggerpunkt sicher vermieden.

Die Vorrichtung zur Durchführung des erfindungsgemäßen Verfahrens ist gekennzeichnet durch die Merkmale gemäß Anspruch 6.

Weitere Ausführungsformen ergeben sich aus den abhängigen Ansprüchen.

### Kurze Beschreibung der Zeichnungen

Die Erfindung soll nachfolgend anhand von Ausführungsbeispielen im Zusammenhang mit der Zeichnung näher erläutert werden. Es zeigen
- Fig. 1: ein auf die Kurbelwellendrehung bezogenes Winkeldiagramm mit den Steuerwinkel für eine herkömmliche Einspritzsteuerung mit einem Triggerpunkt,
- Fig. 2: ein Fig. 1 entsprechendes Diagramm mit zwei Triggerpunkten gemäß der Erfindung, und
- Fig. 3: im Blockschaltbild eine beispielhafte Steuerung zur Durchführung des Verfahrens nach der Erfindung.

### Detaillierte Beschreibung der Erfindung und bester Weg zur Ausführung der Erfindung

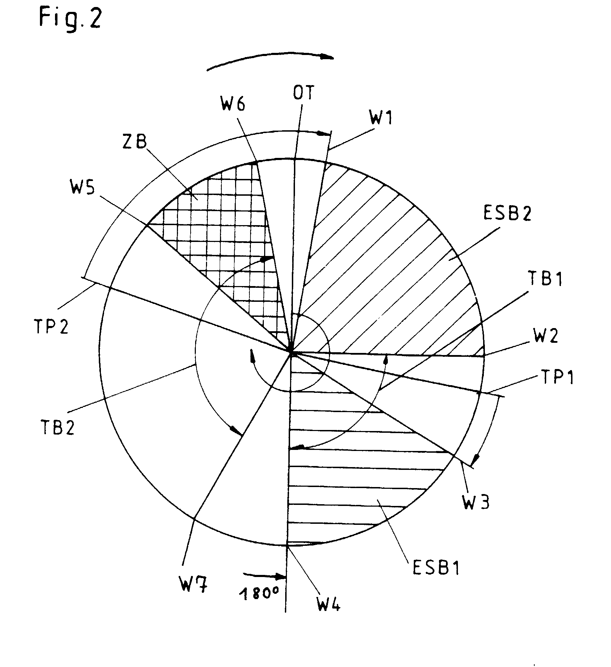

In Fig. 2 sind die Veränderungen erkennbar, welche sich durch die Erfindung in einem Winkeldiagramm gemäß Fig. 1 ergeben. Es wird wiederum von zwei Bereichen (ESB1) und (ESB2) des Einspritzbeginns ausgegangen, die sich von Winkel W4 (180° KW) bis W3 (240° KW) und von Winkel W2 (270° KW) bis W1 (350° KW) vor dem oberen Totpunkt (OT) erstrecken. Zusätzlich zu dem ersten Triggerpunkt (TP1), der in einem ersten Triggerbereich (TB1) (von W4 bis W1) liegen kann, ist nun ein zweiter Triggerpunkt (TP2) vorgesehen, der in einem zweiten Triggerbereich (TB2) zwischen W6 und W7 liegen kann. W6 ist dabei vorzugsweise etwa 10° KW vor dem oberen Totpunkt, und W7 etwa 150° KW vor dem oberen Totpunkt. Erhöhen sich vom Leerlauf ausgehend die Drehzahlen des Motors, wird die Einspritzsteuerung ab einer gewissen Schwellendrehzahl vom ersten Triggerpunkt (TP1) im ersten Triggerbereich (TB1) auf den zweiten Triggerpunkt (TP2) im zweiten Triggerbereich (TB2) umgestellt. Dadurch verkürzt sich die Winkelspanne zwischen Triggerpunkt und Einspritzbeginn, wodurch der Einfluß von Drehzahlschwankungen auf die Einspritzsteuerung minimiert wird.

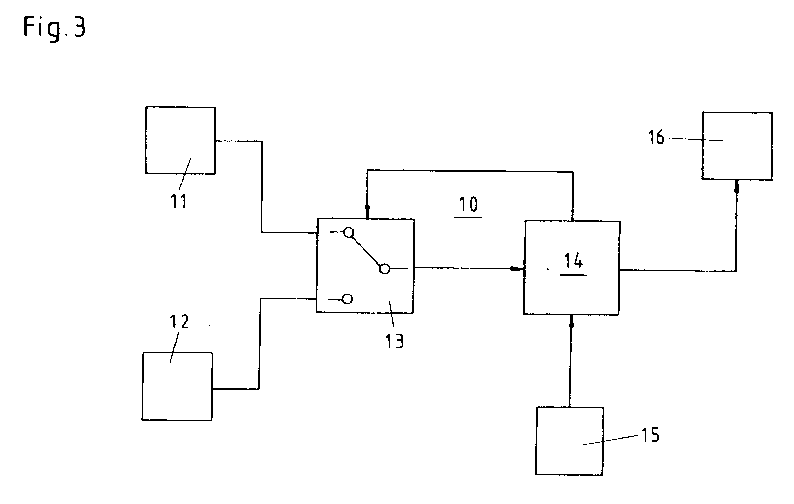

Ein einfaches Ausführungsbeispiel für eine Steuervorrichtung zur Durchführung des Verfahrens ist in Fig. 3 schematisch dargestellt. Die Steuervorrichtung 10 umfaßt einen zentralen Steuerteil (mit Mikroprozessor o.dgl.), der über einen gesteuerten Umschalter 13 wahlweise von zwei Triggersignalgebern 11 bzw. 12 Triggersignale zur Steuerung des Einspritzbeginns erhält. Der erste Triggersignalgeber 11 ist dabei dem ersten Triggerpunkt (TP1) zugeordnet, der zweite Triggersignalgeber 12 dem weiten Triggerpunkt (TP2). Die für das Umschalten notwendige Drehzahlinformation kann der Steuerteil grundsätzlich aus der Abfolge der Triggersignale ableiten. Es ist in vielen Fällen jedoch zweckmäßig, einen separaten Drehzahlgeber 15 vorzusehen, der die Drehzahlwerte an den Steuerteil 14 abgibt. Der Ausgang des Steuerteils 14 ist mit dem Einspritzventil 16 verbunden, dessen Öffnungsbeginn und Öffnungsdauer gesteuert werden.

Der erste Triggersignalgeber 11 kann ein Hall-Geber oder ein ähnlicher Kurbelwinkelsensor sein, der an entsprechender Stelle am Motor plaziert ist. Der zweite Triggersignalgeber 12 könnte zweckmäßigerweise bei Motoren mit Polrad/Lüfterrad und eingegossenem Magnet zur Steuerung der Zündung dieser Magnet selbst sein. Bei anderen Motorkonfigurationen könnte diese Aufgabe ebenso ein weiterer Hall-Geber übernehmen.

Dieser zweite Triggersignalgeber 12 bzw. Triggerpunkt (TP2) sollte sich - wie bereits erwähnt - in einem Winkelbereich von ca. 10 - 150° KW vor dem oberen Totpunkt befinden. Bei serienmäßigen schnellaufenden Zweitakt-Brennkraftmaschinen, wie sie auch in Handarbeitsgeräten der Anmelderin Verwendung finden, befindet sich der Zündmagnet als Triggersignalgeber ca. 20° KW vor dem oberen Totpunkt (OT). Eine Überschneidung von Rechenzeit/Einspritzdauer/Triggerpunkt wird somit vermieden. Damit wird für jede Motorumdrehung in Abhängigkeit vom Last- und Drehzahlbereich ein optimaler Einspritzbeginn in Verbindung mit der erforderlichen Einspritzdauer gewährleistet.

Insgesamt ergibt sich mit der Erfindung ein Verfahren und eine Vorrichtung zur Steuerung von schnellaufenden 2-Takt-Brennkraftmaschinen mit Einspritzung, welche sicherstellen, daß die Brennkraftmaschine im gesamten Drehzahlbereich ein optimales Betriebsverhalten, welches sich im Leistungslauf, im Schadstoffausstoß, sowie in Form eines gleichförmigen Motorlaufes äußert, aufweist.

### Bezugszeichenliste:

- Steuervorrichtung: 10
- Triggersignalgeber: 11, 12
- Umschalter: 13
- Steuerteil: 14
- Drehzahlgeber: 15
- Einspritzventil: 16
- Bereich Einspritzbeginn: ESB1, ESB2
- Oberer Totpunkt: OT
- Triggerbereich: TB
- Triggerbereich: TB1, TB2
- Triggerpunkt: TP
- Triggerpunkt: TP1, TP2
- Zündbereich: ZB
- Winkel: W1 - W7

## Patentansprüche

1. Verfahren zur Steuerung eines Einspritzventils (16) bei einer schnellaufenden 2-Takt-Brennkraftmaschine mit Kraftstoffeinspritzung und wenigstens einem auf einer Kurbelwelle drehbar angeordneten Kolben, bei welchem Verfahren bei jeder Umdrehung der Maschine mittels eines den Drehwinkel der Kurbelwelle abtastenden Triggersignalgebers an einem Triggerpunkt (TP) ein Triggersignal erzeugt und mit dem Triggersignal eine Berechnung des Einspritzbeginns und der Einspritzdauer eingeleitet wird, wobei für niedrige Drehzahlen der Einspritzbeginn in einem ersten Bereich (ESB1) des Kurbelwellen-Drehwinkels liegt, und wobei für hohe Drehzahlen der Einspritzbeginn in einem zweiten Bereich (ESB2) des Kurbelwellen-Drehwinkels liegt, welcher zweite Bereich (ESB2) gegenüber dem ersten Bereich (ESB1) in Richtung "früh" vor dem oberen Totpunkt (OT) verschoben ist, dadurch gekennzeichnet, dass jedem der beiden Bereiche (ESB1 bzw. ESB2) ein eigener Triggerpunkt (TP1 bzw. TP2) zugeordnet ist, dass zwei separate den Drehwinkel der Kurbelwelle abtastende Triggersignalgeber (11, 12) vorhanden sind, welche unterschiedlichen Winkelbereichen der Kurbelwelle zugeordnet sind und am jeweiligen Triggerpunkt (TP1 bzw. TP2) ein Triggersignal erzeugen, welches wahlweise zur Einleitung der Berechnung des Einspritzbeginns und der Einspritzdauer verwendet wird, und dass beim Wechsel zwischen niedrigen und hohen Drehzahlen ab einer vorgegebenen Schwelldrehzahl ein Umschalten der Steuerung zwischen den beiden Triggerpunkten (TP1, TP2) bzw. Triggersignalen erfolgt.

2. Verfahren nach Anspruch 1, dadurch gekennzeichnet, dass die beiden Triggerpunkte (TP1 bzw. TP2) jeweils in einem Triggerbereich (TB1 bzw. TB2) liegen, welcher im Bezug auf den Kurbelwellen-Drehwinkel nahe vor dem zugehörigen Einspritzbereich (ESB1 bzw. ESB2) liegt.

3. Verfahren nach Anspruch 2, dadurch gekennzeichnet, dass der erste Bereich (ESB1) innerhalb von etwa 180-240 °KW vor dem oberen Totpunkt (OT) der Maschine liegt, dass der zweite Bereich (ESB2) innerhalb von etwa 270-350 °KW vor dem oberen Totpunkt (OT) liegt, dass der erste Triggerbereich (TB1) innerhalb von etwa 180-350 °KW vor dem oberen Totpunkt (OT) liegt, und dass der zweite Triggerbereich (TB2) innerhalb von etwa 10-150 °KW vor dem oberen Totpunkt (OT) liegt.

4. Verfahren nach Anspruch 3, dadurch gekennzeichnet, dass die Zündung der Maschine mittels eines Zündmagneten mehr als 10 °KW, insbesondere etwa 20 °KW, vor dem oberen Totpunkt (OT) erfolgt, und dass das vom Zündmagneten abgegebene Zündsignal als Triggersignal für den zweiten Einspritzbereich (ESB2) verwendet wird.

5. Verfahren nach einem der Ansprüche 1 bis 4, dadurch gekennzeichnet, dass zur Erzeugung eines oder beider Triggersignale Hall-Geber verwendet werden.

6. Vorrichtung zur Durchführung des Verfahrens nach einem der Ansprüche 1 bis 5 mit einer schnellaufenden 2-Takt-Brennkraftmaschine mit Kraftstoffeinspritzung und wenigstens einem auf einer Kurbelwelle drehbar angeordneten Kolben, dadurch gekennzeichnet, dass die Vorrichtung (10) zwei separate den Drehwinkel der Kurbelwelle abtastende Triggersignalgeber (11, 12) umfasst, welche unterschiedlichen Winkelbereichen der Kurbelwelle zugeordnet sind, dass die Vorrichtung (10) einen Steuerteil (14) umfasst, welcher über einen vom Steuerteil (14) drehzahlabhängig gesteuerten Umschalter (13) wahlweise mit einem der zwei Triggersignalgeber (11, 12) verbindbar ist, und dass ein Ausgang des Steuerteils (14) mit dem Einspritzventil (16) in Wirkverbindung steht.

7. Vorrichtung nach Anspruch 6, dadurch gekennzeichnet, dass ein Drehzahlgeber (15) vorgesehen ist, welcher mit dem Steuerteil (14) in Verbindung steht.

8. Vorrichtung nach einem der Ansprüche 6 und 7, dadurch gekennzeichnet, dass die Brennkraftmaschine einen Zündmagneten umfasst, und dass der Zündmagnet gleichzeitig Teil eines der beiden Triggersignalgeber (11, 12) ist.

9. Vorrichtung nach einem der Ansprüche 6 bis 8, dadurch gekennzeichnet, dass der Steuerteil (14) einen Rechner umfasst, welcher aus dem Triggersignal und ggf. der Drehzahl den Einspritzbeginn und die Einspritzdauer berechnet.

## Claims

1. A method for the control of an injection valve (16) for a high-speed two-cycle internal combustion engine with fuel injection and at least one piston rotatingly placed on a crankshaft, method for which a trigger signal is generated at a trigger point (TP) at each rotation of the engine by means of a trigger signal generator which scans the angle of rotation of the crankshaft and a calculation of the injection begin and injection duration is introduced with the trigger signal, whereby for low numbers of revolutions the injection begin is situated in a first area (ESB1) of the angle of rotation of the crankshaft and whereby for high numbers of revolutions the injection begin is situated in a second area (ESB2) of the angle of rotation of the crankshaft, the second area (ESB2) being offset relatively to the first area (ESB1) in direction "early" before the upper dead center (OT), characterized in that an own trigger point (TP1 or TP2) is assigned to each of the two areas (ESB1 or ESB2), that there are two separate trigger signal generators (11, 12) which scan the angle of rotation of the crankshaft which are assigned to different angle areas of the crankshaft and generate, at the respective trigger point (TP1 or TP2), a trigger signal which is optionally used for introducing the calculation of the injection begin and the injection duration and that a change-over of the control between the two trigger points (TP1, TP2) or trigger signals is carried out by changing between low and high numbers of revolutions from a predetermined threshold number of revolutions on.

2. A method according to claim 1, characterized in that the two trigger points (TP1 or TP2) are respectively situated in a trigger area (TB1 or TB2) which is situated relatively to the angle of rotation of the crankshaft close before the corresponding injection area (ESB1 or ESB2).

3. A method according to claim 2, characterized in that the first area (ESB1) is situated within an angle of rotation of the crankshaft of approximately 180-240° before the upper dead center (OT) of the engine, that the second area (ESB2) is situated within an angle of rotation of the crankshaft of approximately 270-350° before the upper dead center (OT), that the first trigger area (TB1) is situated within an angle of rotation of the crankshaft of approximately 180-350° before the upper dead center (OT) and that the second trigger area (TB2) is situated within an angle of rotation of the crankshaft of approximately 10-150° before the upper dead center (OT).

4. A method according to claim 3, characterized in that the ignition of the engine is carried out by means of a magneto at an angle of rotation of the crankshaft of more than 10°, especially of approximately 20°, before the upper dead center (OT) and that the ignition signal delivered by the magneto is used as a trigger signal for the second injection area (ESB2).

5. A method according to one of the claims 1 to 4, characterized in that Hall generators are used for the generation of one or of both trigger signals.

6. A device for carrying out the method according to one of the claims 1 to 5 with a high-speed two-cycle internal combustion engine with fuel injection and at least one piston rotatingly placed on a crankshaft, characterized in that the device (10) comprises two separate trigger signal generators (11, 12) which scan the angle of rotation of the crankshaft which are assigned to different angle areas of the crankshaft, that the device (10) comprises a control part (14) which can be optionally connected to one of the two trigger signal generators (11, 12) over a commutator (13) controlled by the control part (14) and that an output of the control part (14) is operationally connected to the injection valve (16).

7. A device according to claim 6, characterized in that an engine speed sensor (15) which is connected to the control part (14) is provided.

8. A device according to one of the claims 6 and 7, characterized in that the internal combustion engine comprises a magneto and that the magneto is simultaneously a part of the two trigger signal generators (11, 12).

9. A device according to one of the claims 6 to 8, characterized in that the control part (14) comprises a computer which calculates the injection begin and the injection duration from the trigger signal and, eventually, from the number of revolutions.

## Revendications

1. Procédé pour la commande d'une soupape d'injection (16) pour un moteur à combustion interne à deux temps à régime rapide avec injection de carburant et au moins un piston placé rotatif sur un arbre-manivelle, procédé pour lequel un signal de déclenchement est généré à un point d'excitation (TP) à chaque rotation du moteur au moyen d'un générateur de signal de déclenchement qui balaie l'angle de rotation de l'arbre-manivelle et un calcul du début de l'injection et de la durée de l'injection étant introduit avec le signal de déclenchement, le début de l'injection se situant, pour des nombres de tours faibles, dans une première zone (ESB1) de l'angle de rotation de l'arbre-manivelle et le début de l'injection se situant, pour des nombres de tours élevés, dans une seconde zone (ESB2) de l'angle de rotation de l'arbre-manivelle, laquelle seconde zone (ESB2) est décalée, par rapport à la première zone (ESB1), en direction de "tôt" devant le point mort supérieur (OT), caractérisé en ce qu'un point de déclenchement propre (TP1 ou TP2) est affecté à chacune des deux zones (ESB1 ou ESB2), qu'il existe deux générateurs séparés de signal de déclenchement (11, 12) qui balaient l'angle de rotation de l'arbre-manivelle qui sont affectés à différentes zones angulaires de l'arbre-manivelle et qui génèrent, au point de déclenchement respectif (TP1 ou TP2), un signal de déclenchement qui est utilisé, au choix, pour introduire le calcul du début de l'injection et de la durée de l'injection et qu'une commutation de la commande entre les deux points de déclenchement (TP1, TP2) ou des signaux de déclenchement est effectuée, lors du changement entre des nombres de tours faibles et élevés, à partir d'un nombre de tours seuil prédéfini.

2. Procédé selon la revendication 1, caractérisé en ce que les deux points de déclenchement (TP1 ou TP2) se situent respectivement dans une zone de déclenchement (TB1 ou TB2) qui se situe, par rapport à l'angle de rotation de l'arbre-manivelle, près devant la zone d'injection correspondante (ESB1 ou ESB2).

3. Procédé selon la revendication 2, caractérisé en ce que la première zone (ESB1) se situe à l'intérieur d'un angle de rotation d'arbre-manivelle d'environ 180-240° devant le point mort supérieur (OT) du moteur, que la seconde zone (ESB2) se situe à l'intérieur d'un angle de rotation d'arbre-manivelle d'environ 270-350° devant le point mort supérieur (OT), que la première zone de déclenchement (TB1) se situe à l'intérieur d'un angle de rotation d'arbre-manivelle d'environ 180-350° devant le point mort supérieur (OT) et que la seconde zone de déclenchement (TB2) se situe à l'intérieur d'un angle de rotation d'arbre-manivelle d'environ 10-150° devant le point mort supérieur (OT).

4. Procédé selon la revendication 3, caractérisé en ce que l'allumage du moteur se fait au moyen d'un magnéto d'allumage à un angle de rotation d'arbre-manivelle de plus de 10°, en particulier à environ 20° devant le point mort supérieur (OT) et que le signal d'allumage donné par le magnéto d'allumage est utilisé comme signal de déclenchement pour la seconde zone d'injection (ESB2).

5. Procédé selon l'une des revendications 1 à 4, caractérisé en ce que des générateurs Hall sont utilisés pour générer un ou les deux signaux de déclenchement.

6. Dispositif pour exécuter le procédé selon l'une des revendications 1 à 5 avec un moteur à combustion interne à deux temps à régime rapide avec injection de carburant et au moins un piston placé rotatif sur un arbre-manivelle, caractérisé en ce que le dispositif (10) comprend deux générateurs de signal de déclenchement séparés (11, 12) qui balaient l'angle de rotation de l'arbre-manivelle qui sont affectés à différentes zones angulaires de l'arbre-manivelle, que le dispositif (10) comprend une partie de commande (14) qui peut être reliée, par un commutateur (13) commandé en fonction du nombre de tours par une partie de commande (14), au choix à l'un des deux générateurs de signal de déclenchement (11, 12) et qu'une sortie de la partie de commande (14) est en relation opérationnelle avec la soupape d'injection (16).

7. Dispositif selon la revendication 6, caractérisé en ce qu'un transmetteur de vitesse (15) est prévu qui est en relation avec la partie de commande (14).

8. Dispositif selon l'une des revendications 6 et 7, caractérisé en ce que le moteur à combustion interne comprend un magnéto d'allumage et que le magnéto d'allumage est simultanément une partie d'un des deux générateurs de signal de déclenchement (11, 12).

9. Dispositif selon l'une des revendications 6 à 8, caractérisé en ce que la partie de commande (14) comprend un ordinateur qui calcule le début de l'injection et la durée de l'injection à partir du signal de déclenchement et, le cas échéant, du nombre de tours.
